(19) **Europäisches Patentamt / European Patent Office / Office européen des brevets**

(11) **EP 2 399 241 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(21) Anmeldenummer: **10711823.4**

(22) Anmeldetag: **09.02.2010**

(51) Int Cl.:
**G06T 7/00** *(2006.01)*

(86) Internationale Anmeldenummer:
**PCT/DE2010/000147**

(87) Internationale Veröffentlichungsnummer:
**WO 2010/097069 (02.09.2010 Gazette 2010/35)**

(54) **VERFAHREN ZUR ENTROPIE-BASIERTEN BESTIMMUNG VON OBJEKTRANDKURVEN**

METHOD FOR THE ENTROPY-BASED DETERMINATION OF OBJECT EDGE CURVES

PROCÉDÉ DE DÉTERMINATION DES CONTOURS D'UN OBJET BASÉE SUR L'ENTROPIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.02.2009 DE 102009009572**

(43) Veröffentlichungstag der Anmeldung:
**28.12.2011 Patentblatt 2011/52**

(73) Patentinhaber: **EADS Deutschland GmbH 85521 Ottobrunn (DE)**

(72) Erfinder: **HIEBL, Manfred 82054 Sauerlach (DE)**

(56) Entgegenhaltungen:
- CHENG H D ET AL: "Color image segmentation: advances and prospects" PATTERN RECOGNITION, ELSEVIER, GB LNKD- DOI: 10.1016/S0031-3203(00)00149-7, Bd. 34, Nr. 12, 1. Dezember 2001 (2001-12-01), Seiten 2259-2281, XP004508355 ISSN: 0031-3203
- WENZHAN DAI ET AL: "An Image Edge Detection Algorithm Based on Local Entropy" INTEGRATION TECHNOLOGY, 2007. ICIT '07. IEEE INTERNATIONAL CONFERENCE ON, IEEE, PI, 1. März 2007 (2007-03-01), Seiten 418-420, XP031127292 ISBN: 978-1-4244-1091-0
- WEN FURONG ET AL: "An novelty color image edge detector based on fast entropy threshold" IEEE TENCON' 02. 2002 IEEE REGION 10 CONFERENCE ON COMPUTERS, COMMUNICATIONS, CONTROL AND POWER ENGINEERING PROCEEDINGS. BEIJING, CHINA, OCT. 28 - 31, 2002; [IEEE REGION 10 ANNUAL CONFERENCE], NEW YORK, NY : IEEE, US, Bd. 1, 28. Oktober 2002 (2002-10-28), Seiten 511-514, XP010628535 ISBN: 978-0-7803-7490-4
- MAKROGIANNIS S ET AL: "Scale space segmentation of color images using watersheds and fuzzy region merging" PROC. 2001 INT. CONF. ON IMAGEE PROCESSING; [INTERNATIONAL CONFERENCE ON IMAGE PROCESSING], THESSALONIKI, GREECE LNKD-DOI:10.1109/ICIP.2001.959150, Bd. 1, 7. Oktober 2001 (2001-10-07), Seiten 734-737, XP010564964 ISBN: 978-0-7803-6725-8
- SIN C F ET AL: "Image segmentation by edge pixel classification with maximum entropy" INTELLIGENT MULTIMEDIA, VIDEO AND SPEECH PROCESSING, 2001. PROCEEDINGS OF 2001 INTERNATIONAL SYMPOSIUM ON 2-4 MAY 2001, PISCATAWAY, NJ, USA,IEEE, 2. Mai 2001 (2001-05-02), Seiten 283-286, XP010544718 ISBN: 978-962-85766-2-3

**EP 2 399 241 B1**

**Beschreibung**

Die Erfindung betrifft ein Verfahren zur entropiebasierten Bestimmung von Objektrandkurven gemäß den Merkmalen des geltenden Patentanspruchs 1.

Es ist bekannt, dass der mittlere Informationsgehalt eines Bildes durch die Entropie charakterisiert wird. Der Betrag der Entropie gibt Auskunft über die minimale Anzahl von Bits, die erforderlich sind, um die Pixel eines Bildes zu speichern. Damit wird auch darüber informiert, ob mit Komprimierungstechniken eine Reduktion des Speicherplatzbedarfes erreicht werden kann, ohne dase dabei Informationsverlust entsteht. Aus A. Shiozaki : "Edge extraction using entropy operator". Academic Press Inc. 1986; Computer vision, graphics, and image processing, 1986, vol. 36, pp.1-9 ist bekannt, Entropie-Operatoren für Objektranddetektion in Bildern zu verwenden.

Aus dem Stand der Technik sind ferner Verfahren bekannt, welche die Entropie in der Bildverarbeitung von mittels Luft-Bodenaufklärung aufgenommener Bilder ausnutzen, z.B. Kantentracker. Bei einem Kantentracker wird das zu untersuchende Bild auf parallele Kanten hin untersucht. Die Suche bricht ab, wenn die Kantenstärke unter einen vorgebbaren Schwellwert fällt. Mit diesem Verfahren ist z.B. die Detektion von Straßen und Wegen möglich. Nachteil dieses Verfahrens ist, dass es nur bei solchen Objekten gute Ergebnisse liefert, welche eine fest umrissene Objektkontur aufweisen. H.D. Cheng et al., "Color image segmentation: advances and prospects, Pattern Recognition 34, Elsevier Science Ltd. 2001, S. 2259-2281 befasst sich mit der Segmentierung von Farbildern, insbesondere Multispektralbidern.

WENZAHN DAI et al:"An Image Edge Detection Algorithm Based on Local Entropy", Integration Technology, 2007. ICIT'07, IEEE International Conference on, IEEE, PI, 1.März 2007, Seiten 418-420 befasst sich mit entropiebasierter Kantendetektion.

Aufgabe der Erfindung ist es, ein Verfahren anzugeben, mit welchem Objekte aufgrund ihrer Farbe und Größe detektiert und klassifiziert werden können.

Diese Aufgabe wird mit den Merkmalen des Patentanspruchs 1 gelöst. Vorteilhafte Ausführungen des Verfahrens sind Gegenstand von Unteransprüchen.

Das erfindungsgemäße Verfahren zur Bestimmung von Objektrandkurven in einem aufgenommenen Bild einer Multispektralkamera umfasst folgende Verfahrensschritte:

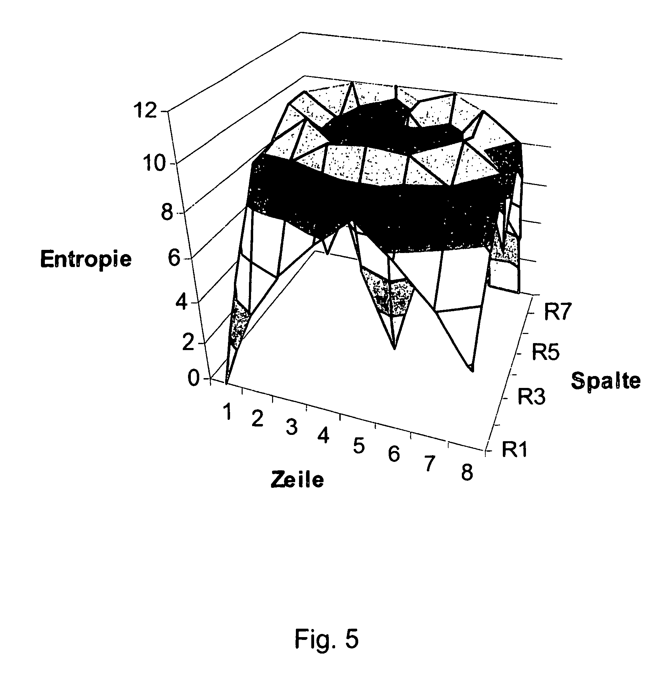

a. Konvertieren des aufgenommenen Bildes in ein Falschfarbenbild,
b. in dem Falschfarbenbild wird jedem Pixel ein Farbtonwert aus dem HSV-Farbraum zugeordnet, wobei der Farbtonwert einem Farbwinkel H auf einem vorgegebenen Farbkreis entspricht,
c. Klassifizierung der Pixel als Objektpixel und Hintergrundpixel, wobei als Objektpixel diejenigen Pixel definiert werden, deren Farbtonwerte innerhalb eines vorgegebenen Wertebereichs liegen,
d. Bestimmung eines Entropieprofils (Fig. 5) mittels eines verschiebbaren Auswertefensters, wobei für jedes Pixel in dem aufgenommenen Bild die Mischungsentropie S aus Objektpixel und Hintergrundpixel berechnet wird gemäß

$$S = -k\left( n_A \ln \frac{n_A}{n_A + n_B} + n_B \ln \frac{n_B}{n_A + n_B} \right)$$

wobei $n_A$ die Zahl der Objektpixel innerhalb des Auswertefensters, $n_B$ die Zahl der Hintergrundpixel innerhalb des Auswertefensters und k einen Proportionalitätsfaktor angibt,

wobei eine Differentiation und Extremwertbetrachtung des ermittelten Entropieprofils durchgeführt wird.

Bei der Verarbeitung von Bildern, welche mittels Luft-Bodenaufklärung aufgenommen werden, unterscheidet man zwischen künstlichen und natürlichen Objekten. Monochrome Objekte können dadurch definiert werden, dass ihnen ein bestimmter Farbton zugewiesen werden kann. Multichrome Objekte lassen sich als Summe mehrerer monochromer Objekte definieren. Das erfindungsgemäße Verfahren kann bei der Klassifizierung von monochromen, d.h. einfarbigen Objekten, als auch für multichrome, d.h. mehrfarbige Objekte verwendet werden.

Das Ausgangsbildmaterial liegt bei modernen Multispektralkameras in Form von RGB-Bildern vor (RGB = Rot, Grün, Blau). Zusätzlich haben manche Kameras noch eine Farbe mehr zur Verfügung, die im Infraroten liegt und die mit IR bezeichnet wird. Da die echte Farbe aufgrund der sogenannten Farbvenrvechslung wenig Aussagekraft besitzt (ein grün lackiertes Auto wäre demnach nicht von der grünen Wiese zu unterscheiden, auf der es geparkt ist), muss, um die Unterscheidung zu ermöglichen, in einen anderen Farbraum transformiert werden, den sogenannten HSV-Raum (HSV = Hue(Farbton), S = Saturation(Sättigung), V = Volume(Hellwert)). Für die Umrechnung existieren mehrere unterschiedliche, einem Fachmann bekannte Verfahren, die aber im Ergebnis äquivalent sind.

Einen wesentlichen Unterschied zwischen Farb- und Farbtondarstellung bildet die Invarianz des Farbtons gegenüber Helligkeitsschwankungen, d.h. während die Farbe sich aufgrund geänderter Belichtungsverhältnisse ändert, bleibt der Farbton über einen weiten Bereich unverändert, so dass sich ein Objekt auch nach Verstreichen einer bestimmten Zeitdauer anhand des Farbtons (H) wiederauffinden lässt.

Die Erfindung sowie vorteilhafte Ausgestaltungen werden im Folgenden anhand von Figuren näher erläutert. Es zeigen:

Fig. 1    einen beispielhaften Ausschnitt aus einem aufgenommenen Bild mit den Farbtonwerten der einzelnen Pixel,
Fig. 2    den Ausschnitt aus Fig. 1 mit als Objektpixel und Hintergrundpixel definierten Pixel,
Fig. 3    einen beispielhaften Ausschnitt aus einem aufgenommenen Bild mit einem beispielhaften Auswertefenster,
Fig. 4    den Ausschnitt aus Fig. 2 mit den entsprechenden Entropiewerten, berechnet mit einem Auswertefenster gemäß Fig. 3,
Fig. 5    eine beispielhafte räumliche Darstellung eines klassifizierten Objekts mit Entropietrichter.

Bei dem erfindungsgemäßen Verfahren wird das aufgenommene Bild in einem ersten Schritt in ein Falschfarbenbild konvertiert. Das aufgenommene Bild kann somit als eine Pixelfläche aus einer vorgebbaren Zahl von Zeilen und Spalten betrachtet werden.

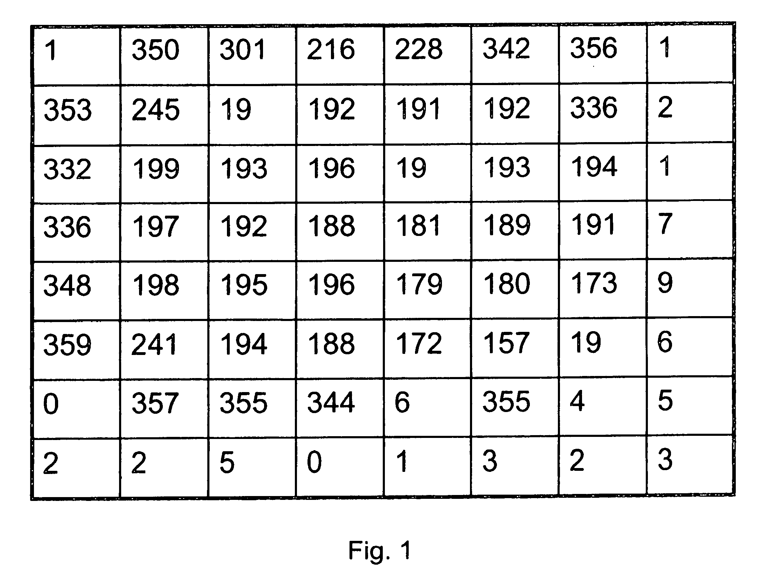

In diesem Falschfarbenbild wird anschließend jedem Pixel ein Farbtonwert aus dem HSV-Farbraum zugeordnet, wobei der Farbtonwert einem Farbwinkel H auf einem vorgegebenen Farbkreis entspricht. Die Darstellung eines HSV-Farbraums ist einem Fachmann z.B. aus http://de.wikipedia.org/wiki/HSV-Farbraum bekannt. Fig. 1 zeigt einen Ausschnitt eines aufgenommenen Bildes, wobei den einzelnen Pixel ein Farbtonwert zugewiesen wurde. Aus Gründen der Darstellbarkeit wurden die Farbabstufungen wie sie bei einem Falschfarbenbild bekannt sind nicht dargestellt.

In einem nächsten Schritt werden die einzelnen Pixel als Objektpixel und Hintergrundpixel klassifiziert. Als Objektpixel werden dabei diejenigen Pixel definiert, deren Farbtonwert innerhalb eines vorgegebenen Wertebereichs liegt. Pixel deren Farbtonwert außerhalb dieses Wertebereichs liegt, werden als Hintergrundpixel definiert. Der vorgegebene Wertebereich wird hierbei aus einer Datenbank entnommen, welche auf die zu findenden Objekte hinsichtlich ihrer Farbtöne trainiert ist.

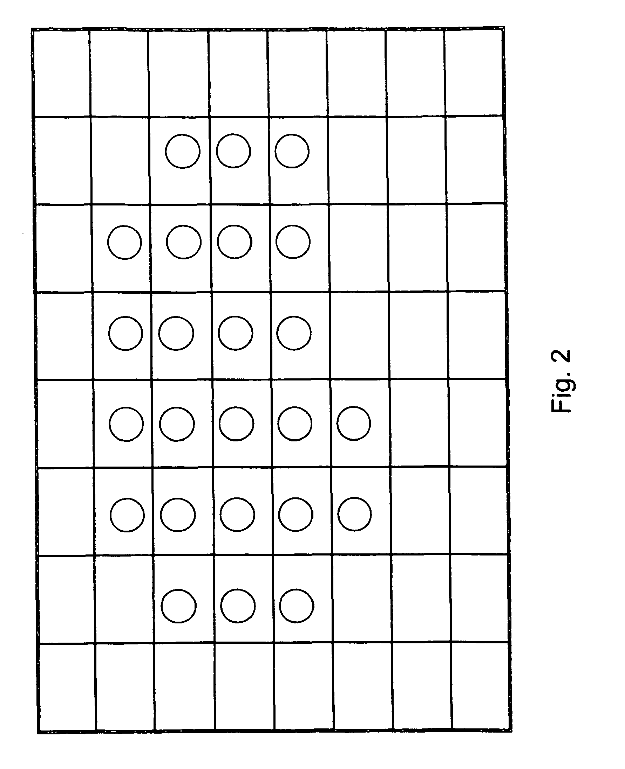

Fig. 2 zeigt den aus Fig. 1 bekannten Ausschnitt mit den als Objektpixel gekennzeichneten Pixel. Beispielhaft wurden in Fig. 2 diejenigen Pixel als Objektpixel definiert, welche einen Farbtonwert von $(189 \pm 10)°$ aufweisen. Diese Klassifikation entspricht dann einem bestimmten Objekt z.B. einer mit Wasser gefüllter Erdaushebung. Eine z.B. mit Öl gefüllte Erdaushebung wäre beispielsweise mit Farbtonwerten zwischen $(151 \pm 10)°$ zu klassifizieren.

In einem nächsten Verfahrensschritt wird ein Entropieprofil für das in Fig. 2 gezeigte klassifizierte Bild bestimmt, wobei für jedes Pixel die Mischungsentropie S aus Objektpixel und Hintergrundpixel berechnet wird.

Hier sei kurz auf den theoretischen Hintergrund der Methode eingegangen und kurz anhand der Boltzmannschen Definition der Entropie erläutert:

Betrachtet wird eine Pixelverteilung von n Pixel mit $n_A$ Objektpixel und $n_B$ Hintergrundpixel. Ausgangspunkt ist die Boltzmannsche Definition der Entropie

$$S = k \ln \Omega \qquad\qquad (1)$$

mit k dem Boltzmann-Faktor und $\Omega$ der Zahl der Anordnungsmöglichkeiten der $n_A$ Objektpixel und $n_B$ Hintergrundpixel.

Gesucht ist die Zahl der unterschiedlichen Realisierungsmöglichkeiten die $n_A$ Objektpixel und $n_B$ Hintergrundpixel in einem Gitter anzuordnen. Die Anzahl der Möglichkeiten, $n_A$ ununterscheidbare Objektpixel und $n_B$ Hintergrundpixel auf n Plätze zu verteilen, ist gegeben durch

$$\Omega = \frac{n!}{n_A! n_B!} \qquad\qquad (2)$$

Einsetzen von Gln.(2) in Gln.(1) und Anwenden der Stirlingformel $\ln n! \approx n \ln n - n$ liefert die Mischungsentropie

$$S = \Delta S_{mix=} - k\left( n_A \ln \frac{n_A}{n_A + n_B} + n_B \ln \frac{n_B}{n_A + n_B} \right) \qquad\qquad (3)$$

Die Entropie ist in willkürlichen Einheiten angegeben. Zweckmäßig wird der Proportionalitätsfaktor (Boltzmann-Konstante) gleich Eins gesetzt.

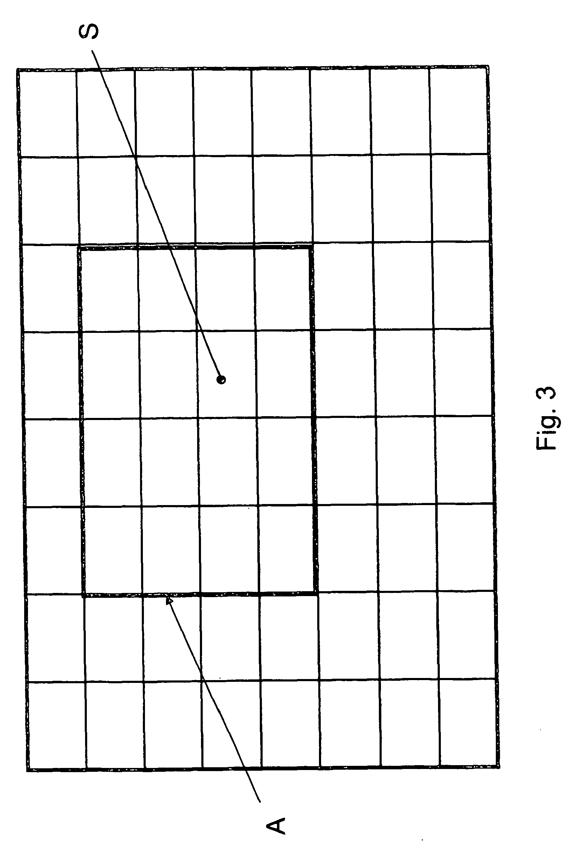

In einer vorteilhaften Ausführung der Erfindung wird ein Auswertefenster mit einer vorgebbaren Länge und Breite definiert, wobei die Größe des Auswertefensters zweckmäßig auf die erwartete Objektgröße abgestimmt ist. Fig. 3 zeigt beispielhaft ein 4x4 Pixel großes Auswertefenster. Die Mischungsentropie gemäß Gln.(3) wird vorteilhaft lokal innerhalb des Auswertefensters A berechnet. Hierbei gibt $n_A$ die Zahl der Objektpixel und $n_B$ die Zahl der Hintergrundpixel an, welche jeweils innerhalb des Auswertefensters liegen. Die aus Gln. (3) berechnete Mischungsentropie wird demjenigen Pixel zugeordnet, welches das Schwerpunktpixel des Auswertefensters A bildet. Im in Fig. 3 dargestellten Fall wird z.B. dasjenige Pixel S als Schwerpunktpixel definiert, dessen linke obere Ecke den Schwerpunkt des Auswertefensters A bildet. Selbstverständlich kann auch jede andere Ecke eines Pixels die Maßgabe für die Definition eines Pixels als Schwerpunktpixel sein.

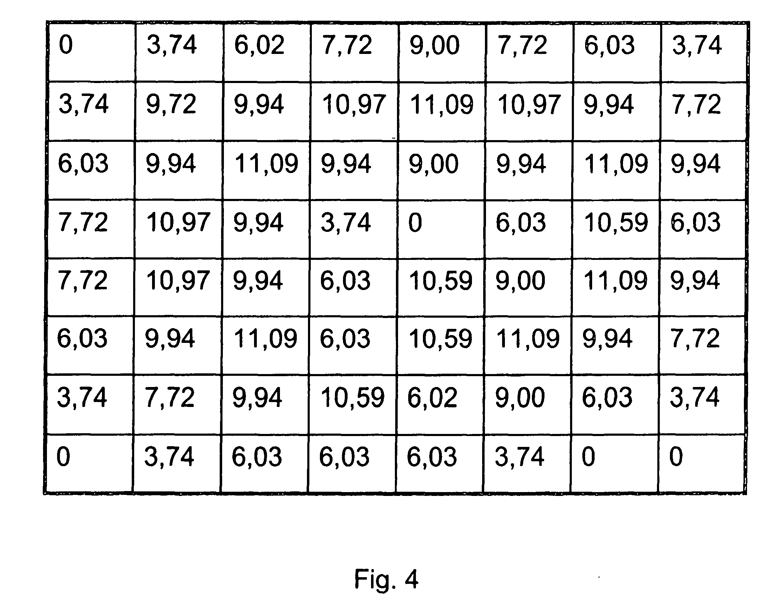

In einem weiteren vorteilhaften Verfahrensschritt wird das Auswertefenster A in Richtung der Länge und/oder Breite des Auswertefensters A jeweils um mindestens einen Pixel verschoben. An dieser neuen Position wird erneut die Mischungsentropie gemäß Gln.(3) berechnet und dem jeweiligen Schwerpunktpixel zugeordnet. Diese Verfahrensschritte werden wiederholt bis jedem Pixel des aufgenommenen und zu untersuchenden Bildes ein Entropiewert zugeordnet wurde. Fig. 4 zeigt für den beispielhaften Fall eines 4x4 Pixel großen Auswertefensters gemäß Fig. 3 die lokalen Entropiewerte in einem Ausschnitt gemäß Fig. 2.

Bei der sukzessiven Berechnung der Mischungsentropie erhält man überall den Wert Null, wo nur eine Pixelsorte vorliegt, d.h. das Auswertefenster liegt gänzlich außerhalb des zu suchenden Objekts oder gänzlich innerhalb desselbigen. Von Null verschiedene Werte erhält man hingegen überall dort, wo wenigstens ein Pixel von jeder Sorte (Objektpixel bzw. Hintergrundpixel) im Auswertefenster enthalten ist. Dadurch ergibt sich ein Entropieprofil. Fig. 5 zeigt die räumliche Darstellung der Entropieverteilung aus Fig. 4. Das Entropieprofil zeigt ein Höhenprofil der Entropie über einer Pixelfläche. Im vorliegenden Beispiel bildet sich im Bereich der Spalte 4 und der Zeile 5 ein Entropieminimum aus. Das Profil zeigt an dieser Stelle eine Art Entropietrichter. Dieser Entropietrichter bildet sich deswegen aus, da die Größe des Auswertefensters kleiner als die tatsächliche Größe des zu suchenden Objekts ist. Wie oben bereits erläutert berechnet sich die Entropie zu Null, wenn innerhalb des Auswertefensters ausschließlich Pixel einer Pixelsorte, hier Objektpixel, vorhanden sind. Die Spitze des Entropietrichters markiert den Objektschwerpunkt des gefundenen Objekts.

Gemäß der Erfindung wird eine Differentiation des Entropieprofils mit anschließender Extremwertbetrachtung durchgeführt. Damit lässt sich eine Objektrandkurve ermitteln. Diese Objektrandkurve zeichnet sich dadurch aus, dass jeweils dort die höchsten Entropiedifferenzen zu finden sind, wo bei der Entropiewertberechnung nach Gln. (3) die Zahl der Objektpixel und die Zahl der Hintergrundpixel im Auswertefenster gleich waren. Wird der Grat (Extremwerte) des Entropiehöhenprofils auf das aufgenommene Bild projiziert, so erhält man ein Maß für die Objektgröße.

Mit dem erfindungsgemäßen Verfahren ist es möglich, farblich verrauschte Objekte mit und ohne feste Kontur sicher voneinander zu unterscheiden und zu klassifizieren. Das Verfahren bietet sich insbesondere an für hochauflösende Vierfarben-Multispektralkameras unter Weglassung der Blaukomponente (Falschfarbenkamera). Das vorgeschlagene Verfahren ist echtzeitfähig und lässt sich auf bewegte Bilder zum Zweck der Zielverfolgung übertragen. Ein weiterer Vorteil des Verfahrens ist, dass auch getarnte Ziele entdeckt werden können.

**Patentansprüche**

1. Verfahren zur Bestimmung von Objektrandkurven in einem aufgenommenen Bild einer Multispektralkamera umfassend folgende Verfahrensschritte:

    a. Konvertieren des aufgenommenen Bildes in ein digitales Falschfarbenbild,
    b. in dem Falschfarbenbild wird jedem Pixel ein Farbtonwert aus dem HSV-Farbraum zugeordnet, wobei der Farbtonwert einem Farbwinkel H auf einem vorgegebenen Farbkreis entspricht,
    c. Klassifizierung der einzelnen Pixel als Objektpixel und Hintergrundpixel, wobei als Objektpixel diejenigen Pixel definiert werden, deren Farbtonwert innerhalb eines vorgegebenen Wertebereichs liegen,
    d. Bestimmung eines Entropieprofils (Fig. 5) mittels eines verschiebbaren Auswertefensters, wobei für jedes Pixel die Mischungsentropie S aus Objektpixel und Hintergrundpixel berechnet wird gemäß

$$S = -k\left( n_A \ln \frac{n_A}{n_A + n_B} + n_B \ln \frac{n_B}{n_A + n_B} \right)$$

wobei $n_A$ die Zahl der Objektpixel innerhalb des Auswertefensters, $n_B$ die Zahl der Hintergrundpixel innerhalb des Auswertefensters und k einen Proportionalitätsfaktor angibt,

wobei eine Differentiation und Extremwertbetrachtung des ermittelten Entropieprofils durchgeführt wird.

2. Verfahren nach Anspruch 1, **dadurch gekennzeichnet, dass** im Verfahrensschritt d) die Mischungsentropie in einem Auswertefenster vorgebbarer Länge und Breite berechnet wird, wobei das Auswertefenster über das in Schritt c) erzeugte Pixelbild verschiebbar ist und wobei die berechnete Mischungsentropie S dem jeweiligen Schwerpunktpixel des Auswertefensters zugeordnet wird und dass in einem weiteren Verfahrensschritt d1) das Auswertefenster um mindestens einen Pixel in Richtung Länge und/oder Breite verschoben wird und dass in einem weiteren Verfahrensschritt d2) der Verfahrensschritt d) wiederholt wird bis jedem Pixel eine Mischungsentropie zugeordnet wurde.

## Claims

1. Method for determining object edge curves in a recorded image of a multispectral camera, comprising the following method steps:

    a. converting the recorded image into a digital false colour image,
    b. assigning a hue value from the HSV colour space to each pixel in the false colour image, the hue value corresponding to a hue angle H on a prescribed colour circle,
    c. classifying the individual pixels as object pixels and background pixels, with those pixels whose hue value lie within a prescribed value range being defined as object pixels, and
    d. determining an entropy profile (Figure 5) by means of a displaceable evaluation window, the mixing entropy S being calculated for each pixel from the object pixel and background pixel in accordance with

$$S = -k\left( n_A \ln \frac{n_A}{n_A + n_B} + n_B \ln \frac{n_B}{n_A + n_B} \right),$$

    $n_A$ specifying the number of the object pixels within the evaluation window, $n_B$ the number of the background pixels within the evaluation window, and k a proportionality factor,

    differentiation and consideration of the extreme value of the determined entropy profile being carried out.

2. Method according to Claim 1, **characterized in that** in method step d) the mixing entropy is calculated in an evaluation window of prescribable length and width, it being possible to displace the evaluation window via the pixel image produced in step c), and the calculated mixing entropy S being assigned to the respective centroid pixel of the evaluation window, and **in that** in a further method step d1) the evaluation window is displaced by at least one pixel in the direction of length and/or width, and **in that** in a further method step d2) the method step d) is repeated until each pixel has been assigned a mixing entropy.

## Revendications

1. Procédé de détermination des contours d'un objet dans une image enregistrée au moyen d'une caméra multispectrale comprenant les étapes suivantes du procédé :

    a. conversion de l'image enregistrée en une image numérique en fausses couleurs,
    b. dans l'image en fausses couleurs, on affecte à chaque pixel une valeur de teinte de l'espace colorimétrique HSV, la valeur de teinte correspondant à un angle colorimétrique H sur un cercle colorimétrique prédéfini,
    c. classement des pixels individuels en pixels d'objet et en pixels de fond, les pixels étant définis comme pixels d'objet lorsque leur valeur de teinte se situe à l'intérieur d'une plage de valeurs prédéfinie,
    d. détermination d'un profil d'entropie (Figure 5) au moyen d'une fenêtre glissante d'exploitation, l'entropie de mélange S étant calculée pour chaque pixel à partir de pixels de l'objet et de pixels du fond selon

$$S = -k\left( n_A \ln \frac{n_A}{n_A + n_B} + n_B \ln \frac{n_B}{n_A + n_B} \right)$$

où $n_A$ indique le nombre de pixels de l'objet à l'intérieur de la fenêtre d'exploitation, $n_B$ le nombre de pixels du fond à l'intérieur de la fenêtre d'exploitation et k un facteur de proportionnalité,

dans lequel on effectue une différentiation et une considération des valeurs extrêmes du profil d'entropie déterminé.

2. Procédé selon la revendication 1, **caractérisé en ce que** dans l'étape d) du procédé, on calcule l'entropie de mélange dans une fenêtre d'exploitation de longueur et de largeur prédéfinies, la fenêtre d'exploitation pouvant glisser sur l'image de pixels engendrée dans l'étape c) et l'entropie de mélange S calculée étant affectée chaque fois au pixel du barycentre de la fenêtre d'exploitation et **en ce que** dans une autre étape du procédé d1), on fait glisser la fenêtre d'exploitation d'au moins un pixel dans la direction de la longueur et/ou de la largeur et **en ce que** dans une autre étape du procédé d2) l'étape du procédé d) est répétée jusqu'à ce qu'une entropie de mélange ait été affectée à chaque pixel.

| 1 | 350 | 301 | 216 | 228 | 342 | 356 | 1 |
|---|---|---|---|---|---|---|---|
| 353 | 245 | 19 | 192 | 191 | 192 | 336 | 2 |
| 332 | 199 | 193 | 196 | 19 | 193 | 194 | 1 |
| 336 | 197 | 192 | 188 | 181 | 189 | 191 | 7 |
| 348 | 198 | 195 | 196 | 179 | 180 | 173 | 9 |
| 359 | 241 | 194 | 188 | 172 | 157 | 19 | 6 |
| 0 | 357 | 355 | 344 | 6 | 355 | 4 | 5 |
| 2 | 2 | 5 | 0 | 1 | 3 | 2 | 3 |

Fig. 1

EP 2 399 241 B1

Fig. 2

Fig. 3

EP 2 399 241 B1

| 0 | 3,74 | 6,02 | 7,72 | 9,00 | 7,72 | 6,03 | 3,74 |
|---|---|---|---|---|---|---|---|
| 3,74 | 9,72 | 9,94 | 10,97 | 11,09 | 10,97 | 9,94 | 7,72 |
| 6,03 | 9,94 | 11,09 | 9,94 | 9,00 | 9,94 | 11,09 | 9,94 |
| 7,72 | 10,97 | 9,94 | 3,74 | 0 | 6,03 | 10,59 | 6,03 |
| 7,72 | 10,97 | 9,94 | 6,03 | 10,59 | 9,00 | 11,09 | 9,94 |
| 6,03 | 9,94 | 11,09 | 6,03 | 10,59 | 11,09 | 9,94 | 7,72 |
| 3,74 | 7,72 | 9,94 | 10,59 | 6,02 | 9,00 | 6,03 | 3,74 |
| 0 | 3,74 | 6,03 | 6,03 | 6,03 | 3,74 | 0 | 0 |

Fig. 4

EP 2 399 241 B1

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **A. SHIOZAKI.** Edge extraction using entropy operator. Academic Press Inc, 1986
- *Computer vision, graphics, and image processing,* 1986, vol. 36, 1-9
- **H.D. CHENG et al.** Color image segmentation: advances and prospects, Pattern Recognition 34. Elsevier Science Ltd, 2001, 2259-2281
- **WENZAHN DAI et al.** An Image Edge Detection Algorithm Based on Local Entropy. *Integration Technology,* 01. Marz 2007, 418-420